(19) Europäisches Patentamt

European Patent Office

Office européen des brevets

(11) **EP 0 989 079 A1**

(12) **EUROPÄISCHE PATENTANMELDUNG**

(43) Veröffentlichungstag:
29.03.2000 Patentblatt 2000/13

(51) Int. Cl.[7]: **B65G 43/00**, B65G 39/16

(21) Anmeldenummer: **98117126.7**

(22) Anmeldetag: **10.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**Bernhard Beumer Maschinenfabrik KG**
**D-59269 Beckum (DE)**

(72) Erfinder:
• **Lauhoff, Hans, Dipl.-Ing.**
  **59269 Beckum (DE)**
• **Rewer, Martin, Dipl.-Ing.**
  **59302 Oelde-Sünninghausen (DE)**

(74) Vertreter:
**Hoormann, Walter, Dr.-Ing.**
**FORRESTER & BOEHMERT**
**Franz-Joseph-Strasse 38**
**80801 München (DE)**

(54) **Verfahren zum Überwachen des (Gerad-) Laufs eines länglichen Zugmittels, insb. eines Fördergurtes od. dgl.**

(57)    Die Erfindung betrifft ein Verfahren und eine Einrichtung zum Überwachen des (Gerad- bzw. Schief-)Laufs eines insb. endlosen, länglichen Zugmittels (2) od.dgl., insb. eines Fördergurtes (2) bspw. eines Gurtbecherwerkes (1), mittels wenigstens eines Initiators ($S_1$ bis $S_4$), der bei einem quer zur Laufrichtung (5) erfolgenden, seitlichen Auswandern ("Schieflauf") des Zugmittels (2) um einen vorgegebenen unteren (ersten) Grenzwert ein (Warn- und/oder Betätigungs-)Signal erzeugt oder/und - ggf. (erst) bei Erreichen eines oberen (zweiten) Grenzwertes - i.a. mittels wenigstens eines weiteren Betätigungselementes bzw. wenigstens einer Betätigungseinrichtung einen Eingriff in den (normalen) Betriebsverlauf (bspw. ein Abschalten des Zugmittelantriebes (7)) bewirkt, wobei dem zu überwachenden Zugmittel (2) an wenigstens einer seitlich zum Zugmittel (2) gelegenen Überwachungsstelle (11 bzw. 12) ein Initiator ($S_1$ bis $S_4$) zugeordnet wird, mittels dessen ein eventueller Schieflauf des Zugmittels (2) i.w. kontinuierlich zu erfassen ist, wobei dem (wenigstens einen) Initiator ($S_1$ bis $S_4$) eine Einrichtung (13, 15, 16, 17 bzw. 19) zugeordnet ist, mittels welcher ein festgestellter Schieflauf des Zugmittels (2) quantitativ anzuzeigen und/oder wenigstens eine Gegenmaßnahme (ggf. selbsttätig) einzuleiten sowie ggf. vollständig durchzuführen ist.

FIG. 2

**Beschreibung**

Die Erfindung betrifft ein Verfahren zum Überwachen des (Gerad-)Laufs eines insb. endlosen, länglichen Zugmittels, insb. eines Fördermittels, insb. eines Fördergurtes, (bspw. eines Gurtbecherwerkes), mittels wenigstens eines dem zu überwachenden Zugmittel zugeordneten Initiators, nach dem Oberbegriff des Anspruches 1.

Die Erfindung betrifft weiterhin eine Einrichtung zur Durchführung des vorgenannten Verfahrens nach dem Oberbegriff des Anspruches 15.

Insbesondere aus der Fördertechnik (aber auch verschiedenen anderen technologischen Gebieten) ist es bekannt, daß zwischen zwei Umlenkmitteln, wie z.B. Trommeln bzw. Walzen bzw. Rollen, umlaufende, endlose Fördermittel wie bspw. und insb. Fördergurte, die Neigung zu einem sog. „Schieflauf" haben, d.h. dazu neigen, aus einer vorgegebenen mittleren Montageposition zur einen oder anderen Seite zu laufen. Abgesehen davon, daß es dabei ggf. bei der Abgabe des transportierten Fördergutes zu Schwierigkeiten kommen kann, besteht das Hauptproblem eines Gurtschieflaufs darin, daß der Fördergurt mit seiner entsprechenden Kante mit ortsfesten Bauteilen in Berührung kommen und dabei (ggf. erheblich) u.U. bis zum Riß beschädigt werden kann. So kann der Gurt beispielsweise an die Gestelle der Tragrollenstationen anlaufen oder z.B. bei einem Gurtbecherwerk mit dem Schachtgehäuse oder sonstigen festen Bauteilen in Berührung kommen und dabei seitlich aufgeschlitzt werden, wobei ggf. auch die Tragkonstruktion des Förderers Schaden nehmen kann.

Genauso verheerend können die Auswirkungen eines Gurtschieflaufs sein, wenn ein Fördergurt (womöglich noch unter Last) seitlich ganz oder teilweise von den ihn führenden und zugleich abzustützenden Trommeln und Tragrollen abläuft, und wenn dabei das transportierte Schütt- oder Stückgut vom Gurt seitlich auf die Transportstrecke abgeworfen wird.

Um einem Gurtschieflauf entgegenzuwirken, werden die den Fördergurt umlenkenden (Antriebs- bzw. Spann-)Trommeln bereits seit vielen Jahren an ihrer mit dem Gurt in Berührung stehenden Mantelfläche nicht zylindrisch, sondern ballig bzw. spiegelsymmetrisch zur in Längsrichtung verlaufenden vertikalen Mittelebene doppelt konisch gestaltet. Durch eine solche Gestaltung werden im mittleren Bereich des Gurtes höhere Spannungen erzeugt als an den Längsrändern, so daß es bei einer seitlichen Auswanderung des Gurtes (Schieflauf) aufgrund der asymmetrischen Spannungsverteilung zu einer zentrierenden Kraftkomponente kommt, welche den Gurt tendenziell wieder zur Mitte führt.

Eine ballige oder i.w. ähnliche Ausgestaltung der Umlenktrommeln hat sich an sich bestens bewährt. Es wurde jedoch festgestellt, daß der Verschleiß der Umlenktrommeln recht erheblich ist, da es beim Umlauf eines Gurtes um eine Trommel bekanntlich zumindest teilweise zu einem Schlupf zwischen der Gurtinnenseite und dem Trommelmantel kommt. Dabei hat sich weiterhin gezeigt, daß dieser Verschleiß nicht etwa in Trommellängsrichtung i.w. gleichmäßig ist. Vielmehr wird dabei die Balligkeit durch Verschleiß abgetragen, so daß sie und damit die Führungswirkung der Umlenktrommeln entsprechend abnimmt und nach einer bestimmten Betriebszeit praktisch völlig verlorengeht. Dieser Zeitraum ist - abhängig von den jeweiligen Bedingungen wie Gurtzugkraft und dadurch erzeugte Pressung zwischen Fördergurt und Trommeloberfläche, Verschmutzung etc. - unterschiedlich groß. Sie beträgt häufig immerhin etwa 2 Jahre, in anderen Fällen aber auch nur z.B. 3 bis 4 Monate.

Letzteres kann bspw. bei Gurtbecherwerken der Fall sein, die zum Vertikaltransport von Zementklinker in Zementwerken eingesetzt werden, da es sich bei Zementklinker um ein recht aggressives Fördergut handelt, welches in Schlupfbereichen auf den Trommelmantel eine schmirgelnde Wirkung ausübt.

In derartigen Fällen kommt es, wie bereits erwähnt worden ist, dann nach einer gewissen Betriebszeit zum Anlaufen des Gurtes an den Becherwerksschlot, wobei spätestens dann die erforderlichen Reparaturmaßnahmen an den Trommeln durchzuführen sind, um deren zentrierernde Wirkung wiederherzustellen, weil es anderenfalls zu geradezu verheerenden Auswirkungen kommen kann, unter Umständen sogar zu einem Gurtriß mit anschließendem Absturz des die Becher haltenden Fördergurtes. Wenn man bedenkt, daß die Förderhöhe von Gurtbecherwerken zwischenzeitlich bereits 100 m überschritten hat, kann man sich ohne weiteres vorstellen, welche Schäden dabei nicht nur durch Beschädigung der Becherwerksschlote, sondern auch durch die erforderlichen Reparaturmaßnahmen und nicht zuletzt den hierdurch verursachten Betriebsausfall entstehen können, da mit dem Stillstand eines in eine Produktionslinie für die Zementherstellung integrierten Becherwerkes die gesamte Produktionslinie regelmäßig stillgesetzt werden muß.

Ein Gurtschieflaufstellt sich jedoch nicht nur unter den vorstehend beschriebenen Umständen ein, sondern bspw. auch dann, wenn sich das Fördergut im Becherwerksfuß im Verlaufe der Zeit aufbaut und so verfestigt, daß die regelmäßig bei Gurtbecherwerken eingesetzte gewichtsbelastete Spannstation „angehoben" wird. Hierdurch wird die Spanntrommel im Becherwerksfuß entlastet, so daß keine den Gurt zentrierenden Spannungen mehr erzeugt werden können, und es daher ebenfalls zu einem Gurtschieflauf kommt.

Eine andere ähnliche Situation, in welcher es zu einem Gurtschieflauf kommen kann, liegt dann vor, wenn der Becherwerksfuß durch Fördergutrückfall bzw. durch zuviel zugeführtes Fördergut überschüttet wird. Auch in derartigen Fällen „schwimmt" die Spanntrommel gleichsam auf, so daß sich keine zentrierende Gurtspannung einstellen kann.

Auch defekte Becherwerkslager können zu einem Gurtschieflauf führen, und zwar bspw. dann, wenn die dabei auftretende Achsverlagerung stärkere Auswirkungen hat als die vorhandene Trommelballigkeit bzw. Doppelkonizität der Trommel.

An dieser Stelle sei angemerkt, daß die sogenannte Balligkeit, also der Radiusunterschied zwischen Mitte Trommel und Außenrand der Trommel, bei einer Gurtbreite von bspw. 2.000 mm im allgemeinen maximal ca. 5 mm beträgt. Dabei liegt also ein Durchmesserunterschied zwischen der Trommelmitte und dem Trommel-Außenrand (an einer Trommel-Stirnseite) von i.a. maximal ca. 10 mm vor.

Um die vorstehend angedeuteten verheerenden Auswirkungen eines erheblichen Gurtschieflaufs zu vermeiden, verwendet die Anmelderin/Patentinhaberin bereits seit diversen Jahren sog. Gurtschieflaufschalter mit zwei Schaltpunkten. Ein solcher Gurtschieflaufschalter wird über einen Schaltnocken, der ins Becherwerksgehäuse hineinragt, abhängig von der vorher eingestellten, diskreten Gurtlage geschaltet. Eine solche Anordnung bzw. Einrichtung hat erkennbar den Nachteil, daß der (die) Schaltnocken ins Becherwerksgehäuse hineinragt (hineinragen), so daß die Gefahr besteht, daß er (sie) bei verhältnismäßig starkem Schieflauf den Gurt bzw. den am Gurt befestigten Becher beschädigt (verformt) oder selbst abgeschert wird.

Der vorliegenden Erfindung liegt die Aufgabe zugrunde, die bekannten Verfahren und Einrichtungen der eingangs beschriebenen Gattung unter Vermeidung der vorgenannten sowie weiterer Nachteile insb. dahingehend zu verbessern, daß es nicht mehr zu einer Beschädigung der entsprechenden Überwachungseinrichtung(en) kommen kann, sondern daß vielmehr die jeweils aktuelle (Momentan-)Lage des zu überwachenden Zugmittels relativ zu dessen vorgegebener mittlerer Ideallage (zumindest im wesentlichen) ständig - vorzugsweise berührungslos - zu ermitteln bzw. zu messen, also festzustellen und somit auch darzustellen ist.

Die Lösung des verfahrensmäßigen Teils der vorgenannten Aufgabe erfolgt erfindungsgemäß dadurch, daß dem zu überwachenden Zugmittel an wenigstens einer seitlich zum Zugmittel gelegenen Überwachungsstelle ein Initiator zugeordnet wird, mittels dessen der Zugmittellauf (und damit ein eventueller Schieflauf des Zugmittels zumindest i.w.) kontinuierlich zu erfassen ist, wobei dem (wenigstens einen) Initiator eine Einrichtung zugeordnet ist, mittels welcher die jeweilige Zugmittelposition und damit ein festgestellter Schieflauf des Zugmittels quantitativ anzuzeigen und/oder wenigstens eine Gegenmaßnahme gegen den festgestellten Schieflauf ggf. selbsttätig einzuleiten sowie ggf. vollständig durchzuführen ist.

Eine bevorzugte Ausgestaltung des erfindungsgemäßen Verfahrens ist gekennzeichnet durch eine Verwendung und/oder eine solche Anordnung eines Initiators, daß die im Abstand zu einer vorgegebenen Stelle des Zugmittels zu erfassen bzw. zu messen und in der einem ordnungsgemäßen mittigen Normallauf entsprechenden Lage des Zugmittels vorzugsweise zu kalibrieren (abzugleichen) ist.

Im Verlaufe der Entwicklungsarbeiten hat sich gezeigt, daß mit dem erfindungsgemäßen Verfahren bspw. bei einem Gutbecherwerk besonders zuverlässig und einfach zu arbeiten ist, wenn an einer Überwachungsstelle zwei einander gegenüberliegende, beiderseits jeweils seitlich zum Fördergurt angeordnete Initiatoren angeordnet werden, wobei dann bevorzugt die von den beiden Initiatoren bei einem Schieflauf (aber auch bereits bei Normallauf) festgestellten Werte einer Meßwert-Addiereinrichtung zugeführt und von dieser vorzugsweise zu einem einzigen (Überwachungsstellen-)Meßwert addiert werden.

Bei diesem Verfahren kann bevorzugt die absolute Größe des einen (ersten) Meßwertes des einen (ersten) Initiators in der Meßwert-Addiereinrichtung als positiver Wert erkannt bzw. bewertet werden, und die absolute Größe des anderen (zweiten) Meßwertes des anderen (zweiten) Initiators als negativer Wert, wobei die beiden Initiatoren so angeordnet bzw. eingestellt werden, daß die beiden Meßwerte bei ordnungsgemäßem mittigen Normallauf (also: Schieflauf im wesentlichen gleich Null) absolut gleich groß sind, ihre Differenz also Null ist.

Insb. bei Förderern wie bspw. einem Gurtbecherwerk hat es sich als besonders zweckmäßig erwiesen, wenn das Überwachungsverfahren benachbart zu (wenigstens) einem Umlenkmittel praktiziert wird, also bspw. bei einem Gurtbecherwerk von 100 m Förderhöhe nicht etwa mittig zwischen den beiden Umlenktrommeln, da gleichsam auf dem Wege zwischen der Mitte der Förderstrecke und einer Trommel (jeweils 50 m) „noch viel passieren" kann, dagegen aber nicht, wenn die Überwachung mit relativ kurzem Abstand zu einer Umlenktrommel durchgeführt wird. Es ist daher bevorzugt vorgesehen, daß wenigstens zwei Überwachungsstellen vorgesehen sind, und zwar die eine (erste) Überwachungsstelle benachbart zu dem einen (ersten) Umlenkmittel, und die andere (zweite) Überwachungsstelle benachbart zu dem anderen (zweiten) Umlenkmittel, wobei es selbstverständlich aber auch möglich ist, andere, ggf. zusätzlich noch weitere Überwachungsstellen vorzusehen.

Obwohl die für das erfindungsgemäße Verfahren verwendeten Initiatoren unterschiedlichster Bauart und auch an unterschiedlichster Stelle angeordnet sein können, hat es sich als besonders zweckmäßig erwiesen, wenn sie so ausgebildet und angeordnet sind, daß sie jeweils den Abstand zu einem an ihnen vorbeilaufenden Becher (und nicht bspw. zum Gurtrand) messen, so daß bei einer solchen Arbeitsweise der Abstand eines Initiators zu dem überwachenden Fördermittel zwar kontinuierlich festgestellt (gemessen) und ausgewertet wird, die entsprechenden Meßsignale aber dennoch diskontinuierlich (allerdings periodisch) erzeugt werden, was für das erfindungsgemäße Überwachungsverfahren ersichtlich höchst vorteilhaft ist. Werden bspw. die Becher eines Gurtbecherwerkes als meßwertauslösende Mittel bzw. Meßstellen des Fördermittels gewählt, so liegen ersichtlich zwischen den Meßstellen und den dazwischen liegenden Bereichen des Fördermittels Verhältnisse vor, die zu einer unterschiedlichen Bedämpfung der Initiatoren führen, also eindeutige Meßsignale bzw. Meßwerte erzeugen.

In anderen Fällen, in denen solche Meßstellen nicht von vornherein zur Verfügung stehen (bspw. bei einem normalen Gurtförderer), kann das Zugmittel (also bspw. ein Fördergurt) zur Schaffung solcher Meßstellen in seiner Längsrichtung mit Elementen versehen werden, welche die Initiatoren beim Passieren eines Initiators jeweils aktivieren. Derartige Elemente können ggf./erforderlichenfalls auch nachträglich angebracht werden. Sie können jedoch zweckmäßigerweise auch bereits bei der Herstellung des Zugmittels (Fördergurtes od.dgl.) in dieses in zweckmäßiger Weise integriert werden.

Die erfindungsgemäße Einrichtung zur Durchführung des erfindungsgemäßen Verfahrens wird nachfolgend bei der Beschreibung von in der Zeichnung dargestellten Ausführungsbeispielen beschrieben, so daß die Figurenbeschreibung überwiegend nicht in spezieller Weise auf die Ausführungsbeispiele abhebt, sondern die erfindungsgemäße Einrichtung ersichtlich auch grundsätzlich bzw. allgemein beschreibt, deren bevorzugte Ausgestaltungen in üblicher Weise - sowohl verfahrensmäßig als auch einrichtungsmäßig - in den Unteransprüchen beschrieben sind. In der Zeichnung zeigt:

Fig. 1         eine stark schematisierte Darstellung eines Gurtbecherwerkes, und zwar

Fig. 1a)       eine Seitenansicht auf das Gurtbecherwerk in Richtung des Pfeiles Ia in Fig. 1b);

Fig. 1b)       eine Schnittdarstellung des Gurtbecherwerkes in Fig. 1a) in Richtung der Schnittlinie Ib - Ib gesehen, und

Fig. 1c)       eine gegenüber den stark verkleinerten Darstellungen in den Fig. 1a) und 1b) erheblich vergrößerte (ebenfalls schematische) Teildarstellung der (analogen) Anzeigeeinrichtung der Gurtlauf-Überwachungseinrichtung;

Fig. 2         eine Darstellung gemäß Fig. 1, wobei die Anzeigeeinrichtung der Gurtlauf-Überwachungseinrichtung als sog. Lichtleiste ausgebildet ist;

Fig. 3         eine gegenüber den Fig. 1 und 2 vergrößerte Teildarstellung des Gurtbecherwerkes; und

Fig. 4-6       eine Anzeige-Lichtleiste gemäß Fig. 2c) bei verschiedenen Betriebszuständen (= unterschiedlichen Relativlagen des Fördergurtes relativ zur Längsmittelachse des Gurtbecherwerkes).

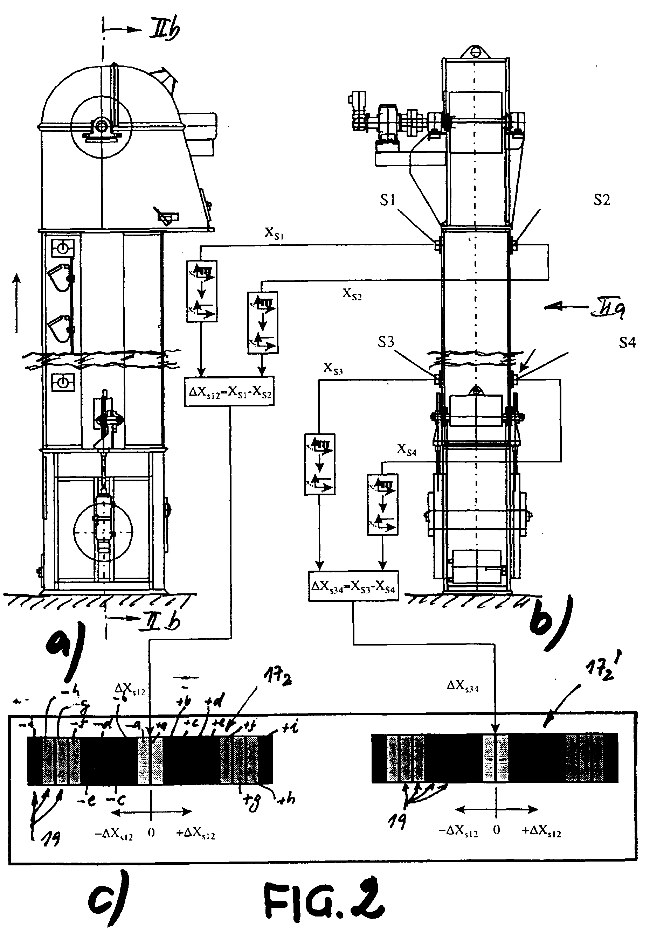

Fig. 1 zeigt in zwei senkrecht zueinander stehenden Seitenansichten (Fig. 1a) bzw. Fig 1b)) ein im ganzen mit 1 bezeichnetes Gurtbecherwerk mit einem endlosen Fördergurt 2, an dessen Außenseite Becher 3 zur Aufnahme von Schüttgut aus dem sog. Becherwerkssumpf 4 mit jeweils einem konstanten Längsabstand t in Förderrichtung (s. Pfeil 5) befestigt sind. Der endlose Fördergurt 2 wird einerseits an einer als Antriebstrommel 6 umgelenkt, die mittels eines Antriebes 7 in Drehung zu versetzen ist, sowie andererseits an einer im Becherwerksfuß 4' angeordneten Spanntrommel, die Bestandteil einer Spindel-Spanneinrichtung 9 ist. Die Betriebsweise des Gurtbecherwerkes 1 erfolgt in bekannter Weise.

Um die weiter oben angesprochenen Schäden zu vermeiden, und im Falle eines Reparaturbedarfs möglichst - beim Auftreten einer erheblichen Schieflauftendenz - unvermeidbare Betriebspausen für Reparaturarbeiten nutzen zu können, ist das Gurtbecherwerk 1 mit einer erfindungsgemäßen Gurtlauf-Überwachungseinrichtung versehen, die nachstehend beschrieben wird:

Kurz vor der Auflaufstelle des Fördergurtes 2 auf die am Kopf des Gurtbecherwerkes 1 befindliche Antriebstrommel 6 sowie kurz hinter der Ablaufstelle des Fördergurtes 2 von der im Becherwerksfuß 4' angeordneten Spanntrommel 8 ist das Gurtbecherwerk 1 (genauer gesagt dessen Gehäuse 10) jeweils mit einem Paar Initiatoren versehen, die als induktive Sensoren mit jeweils analogem Ausgangssignal ausgebildet und nachstehend mit S1, S2 bzw. S3 und S4 bezeichnet sind. Die Initiatoren bzw. Sensoren S1 - S4 wirken berührungslos mit dem aus dem Fördergurt 2 und den Bechern 3 bestehenden Fördermittel 2, 3 zusammen. An dieser Stelle sei darauf verwiesen, daß eine Ausbildung der Initiatoren als induktive Sensoren sich als besonders zweckmäßig herausgestellt hat, weil sie gegen eine Verschmutzung bzw. Verkrustung der Becherwerksschlotwand mit Fördergut und/oder Fördergutverwirbelungen im Becherwerksschlot außerordentlich unempfindlich sind.

Weiterhin sei darauf verwiesen, daß im Stand der Technik außer den oben erwähnten Gurtschieflaufschaltern (mit zwei Schaltpunkten) der Anmelderin/Patentinhaberin auch bereits Becherwerksschieflaufschalter mit induktiven Sensoren bekannt sind, die so ausgebildet und angeordnet sind, daß sie pro zu erkennende Gurtlage bei einem bestimmten Punkt schalten, um eine Becherwerksabschaltung zu erzeugen, jedoch nicht etwa eine laufende Überwachung des Gurtverlaufes bzw. der Gurtlage ermöglichen, wie dieses vom Gegenstand der vorliegenden Erfindung u.a. angestrebt wird.

In einer gewissen Verfeinerung dieser vorbekannten Technologie ist ein solcher Gurtlagen-Schaltpunkt auch bereits mit Zeitgliedern kombiniert worden, wobei bis zum Ablauf einer ersten Zeit T1 lediglich die Fördergutzufuhr abgeschaltet und erst nach Ablauf einer längeren Zeitspanne T2 eine Becherwerksabschaltung erzeugt wird. Dabei wird auch die Schieflaufseite bzw. -richtung nicht abgefragt und verwertet, und es erfolgt, wie erwähnt, im noch zulässigen Schieflaufbereich keine Signalgebung und Auswertung der jeweils momentanen Gurtlage, die eine eingesetzte Schieflauftendenz erkennen lassen würde. Dieses ist jedoch ersichtlich außerordentlich zweckmäßig, weil sich gezeigt hat, daß eine eingesetzte Gurtschieflauftendenz nicht etwa während des weiteren Betriebes ihre Richtung (zur anderen Seite hin) wechselt, sondern sich im Verlaufe des weiteren Betriebes mehr oder weniger stetig zu derjenigen Seite hin fortsetzt, zu welcher hin ein Schieflauf eingesetzt hat, so daß man sich bei einsetzendem Schieflauf darauf einstellen kann, welche Maßnahme(n) zu gegebener Zeit zu ergreifen ist (sind).

Denn wenn man bereits während des Normalbetriebes (genauer gesagt innerhalb noch durchaus zulässiger Schieflaufbereiche) eine solche Schieflauftendenz bereits rechtzeitig erkennt, wie dieses u.a. Ziel der vorliegenden Erfindung ist, so lassen sich ersichtlich rechtzeitig die zu gegebener Zeit erforderlich werdenden Gegenmaßnahmen einleiten bzw. vorbereiten, wodurch bei Einsatz der vorliegenden Erfindung i.d.R. durch Schieflauf keine zusätzlichen Betriebsausfälle mehr erforderlich sind, weil die von einem bestimmten Zeitpunkt an gebotenen Wartungs- bzw. Reparaturarbeiten sich in aus anderen Gründen vorgenommene Betriebspausen verlegen lassen, was bspw. in Zementwerken zu einer ganz erheblichen Kosteneinsparung allein durch Vermeidung schieflaufbedingter Ausfallzeiten führt.

Wie bereits kurz erwähnt worden ist, sind die beiden Sensoren S1 und S2 an einer oberen Überwachungsstelle 11 und die beiden Sensoren S3 und S4 an einer unteren Überwachungsstelle 12 des Becherwerks 1 an dessen Gehäuse (Schloten) 10'zw. 10" befestigt, und zwar so, daß die Becher 3 während des Betriebes (in Förderrichtung 5) an ihnen berührungslos vorbeilaufen, daß sie aber bei einem Vorbeilauf eines Bechers 3 jeweils durch entsprechende (induktive) Bedämpfung ein Signal $X_s$ erzeugen, welches in Fig. 1 jeweils als Kurve (Graph) in Abhängigkeit von der Zeit t dargestellt ist, und jeweils in einem Umformer 15 in einen Meßwert umgewandelt wird, der dem jeweiligen Abstand einer Becher-Stirnseite 3' bzw. 3" zu dem jeweiligen Initiator bzw. Sensor $S_n$ beim Vorbeilauf eines Bechers 3 entspricht.

Die von den Sensoren S1 und S2 erzeugten Signale werden in einer Meßwert-Addiereinrichtung 16 addiert. In entsprechender Weise werden die Signale der Sensoren S3 und S4 in einer Meßwert-Addiereinrichtung 16' addiert. Genauer gesagt handelt es sich bei den Meßwert-Addiereinrichtungen 16 und 16' eigentlich um Subtrahiereinrichtungen. Denn bei der Kalibrierung der Überwachungseinrichtung erfolgen die Anordnung und der Abgleich der Initiatorpaare S1 und S2 bzw. S3 und S4 jeweils so, daß bei ordnungsgemäßer mittiger Anordnung des Fördergurtes 2 der Abstand der Becher-Stirnwand 3' zum Sensor S1 und der Abstand der Becherstirnwand 3" zum Sensor S2 gleich groß ist. Werden dabei die ermittelten Abstände $X_{s1}$ und $X_{s2}$ voneinander in der Addier- bzw. Subtrahiereinrichtung subtrahiert, so ist das Summensignal $\Delta X_{s12} = 0$, wie in Fig. 1c) von dem linken Instrument 17 der Anzeigeeinrichtung 13 beispielhaft angezeigt wird.

Der dort mit einem gekrümmten Pfeil angezeigte Bereich a entspricht dem Normalbetrieb, während der mit b bezeichnete Bereich einen Gefahrenbereich signalisiert, so daß in diesem Bereich außer der optischen Anzeige auch ein akustisches Warnsignal erzeugt wird. Bei Erreichen des äußersten Punktes 18 bzw. 18' wird der Abschaltpunkt erreicht, bei dem der Antrieb 7 des Becherwerkes 1 (not-)abgeschaltet wird. Entsprechendes gilt selbstverständlich und ersichtlich bzgl. der unteren Überwachungsstelle 12.

Dabei sei noch darauf verwiesen, daß an den Anzeigeinstrumenten 17 und 17' auch jeweils abzulesen ist, ob ein Schieflauf des Fördergurtes 2 nach links erfolgt oder nach rechts. Im erstgenannten Fall sind die gemessenen und angezeigten Abstandswerte mit $+X_s$ bzeichnet und im letzteren Falle mit $-X_s$.

Fig. 2 unterscheidet sich von der Darstellung gemäß Fig. 1 lediglich durch anderweitig ausgebildete Anzeigeinstrumente $17_2$, $17_2'$. Diese sind nämlich jeweils als Lichtleiste mit einzelnen LED-Elementen ausgebildet, die in Fig. 2c) von der Mitte aus am Beispiel der Lichtleiste $17_2$ mit +a, +b,..., +i bzw. -a, -b,...,-i bezeichnet sind, und im folgenden z. B. als LED-Element $19_{+f}$.

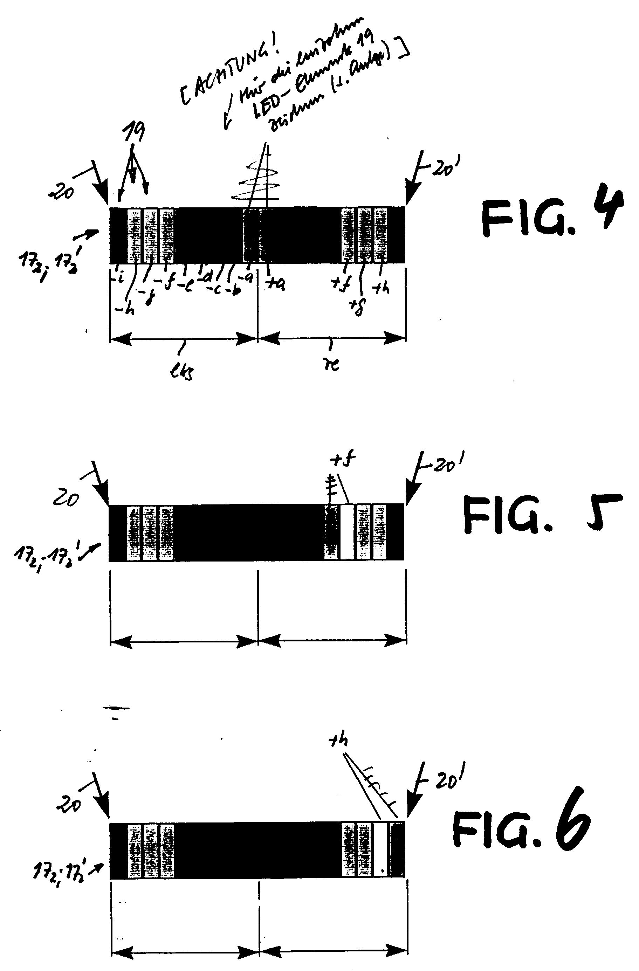

Beispielhafte signifikante Signalzustände der Anzeigeinstrumente $17_2$ bzw. $17_2'$ sind anhand der Fig. 4 bis 6 dargestellt und werden nachfolgend erläutert:

Fig. 4 zeigt das Anzeigeinstrument $17_2$ bzw. $17_2'$ bei mittigem Gurtlauf. Dieses ist dadurch zu erkennen, daß die beiden mittleren bzw. inneren LED-Elemente $19_{+a}$ und $19_{-a}$ aktiviert sind und ein entsprechendes Lichtsignal erzeugen, während die übrigen LED-Elemente 19 nicht aktiviert sind.

Fig. 5 zeigt das Anzeigeinstrument $17_2$ bzw. $17_2'$ bei einer Verschiebung des Fördergurtes 2 nach rechts, wobei unter Bezugnahme auf die Fig. 4 bis 6 noch nachgetragen sei, daß die Pfeile 20 das linke Becherwerksgehäuse 10 bzw. den linken Schlot 10' symbolisieren und die Pfeile 20' das rechte Becherwerksgehäuse bzw. den rechten Schlot 10":

In Fig. 5 zeigt das Anzeigeinstrument $17_2$ bzw. $17_2'$ an, daß der Gurt 2 so weit nach rechts verschoben ist, daß er den Normalbetriebsbereich a bereits verlassen und den Vorwarnbereich b erreicht hat, in dem außer der entsprechenden optischen Meldung durch das LED-Element $19_{+f}$ auch ein nicht dargestellter akustischer Alarmgeber aktiviert ist.

Fig. 6 zeigt schließlich durch Aktivierung des LED-Elementes $19_{+h}$ an, daß der Fördergurt so weit nach rechts verschoben ist, daß er sich dem rechten Becherwerksschlot 10" bereits so stark angenähert hat, daß nunmehr unverzüglich eine Notabschaltung des Antriebes 7 erfolgt bzw. erfolgt ist.

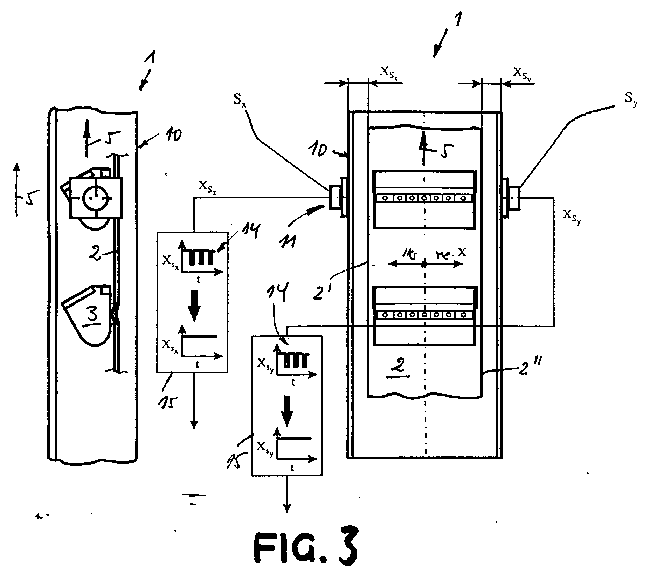

Zu Fig. 3 sei lediglich angemerkt, daß diese einen vergrößerten Ausschnitt auf Fig. 1 bzw. Fig. 2 wiedergibt, der etwa/im wesentlichen den in Fig. 1 mit einer strichpunktierten Linie umgrenzten Teilbereich III wiedergibt, und das Verständnis der vorliegenden Erfindung noch vereinfachen soll, wobei der Gurtschieflauf (nach links oder rechts) mit X bezeichnet ist, die beiden Initiatoren bzw. Sensoren mit $S_x$ bzw. $S_y$, und die Abstände zwischen der jeweiligen Gurtkante 2' bzw. 2" mit $X_{Sx}$ bzw. $X_{Sy}$.

In diesem Falle wird ersichtlich von den Sensoren $S_x$ und $S_y$ jeweils der Abstand zur Gurtkante 2' bzw. 2" gemessen und in der weiter oben bereits beschriebenen Weise (oder auch jeweils als Einzelsignal) verarbeitet. Es erfolgt also eine kontinuierliche Messung des Abstandes, während bei den Ausfführungsbeispielen gemäß den Fig. 1 und 2 eine quasikontinuierliche (periodische) Messung erfolgt, weil dort die Becher 3 jeweils bei ihrem Vorbeilauf ein Meßsignal erzeugen.

| BEZUGSZEICHENLISTE | | | |
|---|---|---|---|
| 1 | Gurtbecherwerk | | |
| 2 | Fördergurt | 2'; 2" | Gurtkante |
| 3 | Becher | 3'; 3" | Stirnseite (von 3) |
| 4 | Becherwerkssumpf | 4' | Becherwerksfuß |
| 5 | Pfeil (Förderrichtung) | | |
| 6 | Antriebstrommel | | |
| 7 | Antrieb | | |
| 8 | Spanntrommel | | |
| 9 | Spindel-Spanneinrichtung | | |
| 10 | Becherwerksgehäuse | 10'; 10" | Schlote (von 10) |
| 11 | (obere) Überwachungsstelle | | |
| 12 | (untere) Überwachungsstelle | | |
| 13 | Anzeigeeinrichtung | | |
| 14 | Signal | | |
| 15 | Umformer | | |
| 16, 16' | Meßwert-Addiereinrichtung | | |
| $17_2$, $17_2$'; 17, 17' | Anzeigeinstrumente | | |
| 18,18' | Abschaltpunkt | | |
| 19 | LED-Elemente (von $17_2$, $17_2$') | | |
| 20, 20' | Pfeile (BW-Gehäuse) | | |
| t | Abstand (zwischen 3/3) | | |
| $S_1$ - $S_4$ | Sensoren (Initiatoren) | | |
| $X_{Sn}$ | Signal (Meßwert) von $S_n$ | | |
| t | Zeit | | |
| a | Meßbereich (Normalbetrieb) | | |
| b | Meßbereich (Vorwarnsignal) | | |

**Patentansprüche**

1. Verfahren zum Überwachen des (Gerad- bzw. Schief-)Laufs eines insbesondere endlosen, länglichen Zugmittels (2) od.dgl., insb. eines Fördergurtes (2) bspw. eines Gurtbecherwerkes (1), mittels wenigstens eines Initiators ($S_1$ bis $S_4$), der bei einem quer zur Laufrichtung (5) erfolgenden, seitlichen Auswandern („Schieflauf") des Zugmittels (2) um einen vorgegebenen unteren (ersten) Grenzwert ein (Warn- und/oder Betätigungs-)Signal erzeugt oder/und - ggf. (erst) bei Erreichen eines oberen (zweiten) Grenzwertes - i.a. mittels wenigstens eines weiteren Betätigungselementes bzw. wenigstens einer Betätigungseinrichtung einen Eingriff in den (normalen) Betriebsverlauf (bspw. ein Abschalten des Zugmittelantriebes (7)) bewirkt, dadurch gekennzeichnet, daß dem zu überwachenden Zugmittel (2) an wenigstens einer seitlich zum Zugmittel (2) gelegenen Überwachungsstelle (11 bzw. 12) ein Initiator ($S_1$ bis $S_4$) zugeordnet wird, mittels dessen ein eventueller Schieflauf des Zugmittels (2) i.w. kontinuierlich zu erfassen ist, wobei dem (wenigstens einen) Initiator ($S_1$ bis $S_4$) eine Einrichtung (13, 15, 16, 17 bzw. 19) zugeordnet ist, mittels welcher ein festgestellter Schieflauf des Zugmittels (2) quantitativ anzuzeigen und/oder wenigstens eine Gegenmaßnahme (ggf. selbsttätig) einzuleiten sowie ggf. vollständig durchzuführen ist.

2. Verfahren nach Anspruch 1, gekennzeichnet durch eine Verwendung und/oder eine solche Anordnung eines Initiators ($S_1$ bis $S_4$), daß mit ihm der Abstand (z. B. $X_{Sx}$, $X_{Sy}$) zu (einer) vorgegebenen Stelle(n) (2', 2", 2) des Zugmittels (2) zu erfassen bzw. zu messen und in der einem ordnungsgemäßen mittigen Normallauf entsprechenden Lage des Zugmittels (2) ggf. zu kalibrieren (abzugleichen) ist.

3. Verfahren nach Anspruch 1 oder 2, dadurch gekennzeichnet, daß an einer Überwachungsstelle (11; 12) zwei einander gegenüberliegende, beiderseits jeweils seitlich zum Zugmittel (2) angeordnete Initiatoren ($S_1$, $S_2$; $S_3$, $S_4$) angeordnet werden.

4. Verfahren nach Anspruch 3, dadurch gekennzeichnet, daß die von den beiden an einer Überwachungsstelle (11 bzw. 12) angeordneten Initiatoren (z.B. $S_1$, $S_2$) bei einem Schieflauf festgestellten Meßwerte (z. B. $X_{S1}$, $X_{S2}$,) einer Meßwert-Addiereinrichtung (16; 16') zugeführt und von dieser zu einem einzigen (Überwachungsstellen-)Meßwert (z.B. $\Delta X_{S12}$) addiert werden.

5. Verfahren nach Anspruch 4, dadurch gekennzeichnet, daß die absolute Größe des einen (ersten) Meßwertes des einen (ersten) Initiators (z.B. $S_1$) in der Meßwert-Addiereinrichtung (z.B. 16) als positiver Wert erkannt bzw. bewertet wird, und die absolute Größe des anderen (zweiten) Meßwertes des anderen (zweiten) Initiators ($S_2$) als negativer Wert, wobei die beiden Initiatoren ($S_1$, $S_2$) so angeordnet bzw. eingestellt werden, daß die beiden Meßwerte bei ordnungsgemäßem mittigen Normallauf (Schieflauf = Null) absolut gleich groß sind, ihre Differenz also Null ist.

6. Verfahren nach einem oder mehreren der vorhergehenden Ansprüche zur Überwachung eines endlosen, während des Betriebes um zwei mit gegenseitigem Achsabstand angeordneten Umlenkmittel (6, 8) umlaufenden Zugmittels (2), wie bspw./insb. eines Becherwerksgurtes (2), der um zwei Trommeln (6, 8) umläuft, von denen die eine (erste) Trommel (6) eine Antriebstrommel und die andere (zweite) i.a. eine Spanntrommel (8) ist. dadurch gekennzeichnet, daß wenigstens zwei Überwachungsstellen (11, 12) vorgesehen sind.

7. Verfahren nach Anspruch 6, dadurch gekennzeichnet, daß die eine (erste) Überwachungsstelle (11) benachbart zu dem einen (ersten) Umlenkmittel (6), und die andere (zweite) Überwachungsstelle (12) benachbart zu dem anderen (zweiten) Umlenkmittel (8) angeordnet ist.

8. Verfahren nach einem oder mehreren der vorhergehenden Ansprüche zur Überwachung des (Gerad- bzw. Schief-)Laufs eines um wenigstens zwei Trommeln (6, 8) umlaufenden, i.a. mittels einer Gurtverbindung endlos gemachten Becherwerksgurtes (2), an dessen Außenseite mit gleichem gegenseitigen Abstand (t) in Gurtlängsrichtung (5) Becher (3) befestigt sind, dadurch gekennzeichnet, daß der (die) Initiator(en) ($S_1$, $S_2$; $S_3$, $S_4$) so ausgebildet und/oder angeordnet sind, daß sie jeweils den Abstand zu einem an ihnen vorbeilaufenden Becher (3) messen.

9. Verfahren nach einem oder mehreren der vorhergehenden Ansprüche, dadurch gekennzeichnet, daß der Abstand eines Initiators ($S_1$ bis $S_4$) zu dem zu überwachenden Zugmittel (2) kontinuierlich festgestellt und ausgewertet wird.

10. Verfahren nach einem oder mehreren der Ansprüche 1 bis 8, dadurch gekennzeichnet, daß der Abstand eines Initiators ($S_1$ bis $S_4$) zu dem Zugmittel (2) diskontinuierlich festgestellt und ausgewertet wird.

11. Verfahren nach Anspruch 10, dadurch gekennzeichnet, daß der Abstand eines Initiators ($S_1$ bis $S_4$) zu dem Zug-

mittel (2) periodisch festgestellt und ausgewertet wird.

12. Verfahren nach einem oder mehreren der Ansprüche 9 bis 11, dadurch gekennzeichnet, daß der Abstand eines Initiators ($S_1$ bis $S_4$) zu dem zu überwachenden Zugmittel (2) (nur) an vorgegebenen diskreten Meßstellen (11; 12) des Zugmittels (2) festgestellt und ausgewertet, nämlich angezeigt und/oder auf andere Weise verwertet wird.

13. Verfahren nach Anspruch 12, dadurch gekennzeichnet, daß als Meßstellen solche Stellen (11; 12) des Zugmittels (2) gewählt bzw. geschaffen werden, an denen das Zugmittel (2) sich bzgl. seiner Bedämpfüngseigenschaften hinsichtlich der verwendeten Initiatoren ($S_1$ bis $S_4$) von den dazwischen liegenden Bereichen des Zugmittels (2) in erheblicher Weise unterscheidet.

14. Verfahren nach Anspruch 13, dadurch gekennzeichnet, daß das Zugmittel (2) zur Schaffung von Meßstellen in seiner Längsrichtung (5) mit Elementen versehen wird, welche den (die) Initiator(en) ($S_1$ bis $S_4$) beim Passieren eines Initiators jeweils aktivieren.

15. Einrichtung zur Durchführung des Verfahrens nach einem oder mehreren der vorhergehenden Ansprüche, mit wenigstens einem Initiator ($S_1$ bis $S_4$), der bei einem quer zur Laufrichtung (5) erfolgenden seitlichen Auswandern („Schieflauf") des zu überwachenden Zugmittels (2) um einen vorgegebenen unteren Grenzwert ein Warn- und/oder Betätigungssignal erzeugt oder/und - ggf. (erst) bei Erreichen eines oberen (zweiten) Grenzwertes - i.a. mittels wenigstens eines weiteren Betätigungselementes bzw. wenigstens einer Betätigungseinrichtung einen Eingriff in den Betriebsverlauf bewirkt, gekennzeichnet durch eine Verwendung wenigstens eines induktiven Initiators ($S_1$ bis $S_4$) mit vorzugsweise analogem Ausgangssignal.

16. Einrichtung zur Durchführung des Verfahrens nach einem oder mehreren der Ansprüche 1 bis 15, mit wenigstens einem Initiator ($S_1$ bis $S_4$), der bei einem quer zur Laufrichtung (5) erfolgenden seitlichen Auswandern („Schieflauf") des zu überwachenden Zugmittels (2) um einen vorgegebenen unteren Grenzwert ein Warn- und/oder Betätigungssignal erzeugt oder/und - ggf. (erst) bei Erreichen eines oberen (zweiten) Grenzwertes - i.a. mittels wenigstens eines weiteren Betätigungselementes bzw. wenigstens einer Betätigungseinrichtung einen Eingriff in den Betriebsverlauf bewirkt, gekennzeichnet durch eine Anzeigeeinrichtung (17 bzw. 19), mittels welcher die Momentanlage des Zugmittels (2) relativ zu dessen vorgegebener mittiger Ideallage (im wesentlichen ständig) anzuzeigen ist.

17. Einrichtung nach Anspruch 15 oder 16, dadurch gekennzeichnet, daß die Initiatoren (z.B. $S_1$, $S_2$) einer Meßstelle (z.B. 11) mit einem Differenzbildner (16) verbunden sind, welcher die absoluten Meßwerte zweier zusammenwirkender Initiatoren ($S_1$, $S_2$,) voneinander subtrahiert und das erhaltene Meßwertdifferenzsignal einer Anzeigeeinrichtung (17 bzw. 19) zuleitet und/oder einer Steuereinrichtung bzw. ggf. deren Rechner.

18. Einrichtung nach einem oder mehreren der Ansprüche 15 bis 17, wobei das erhaltene Istwert-Signal mittels einer Anzeigeeinrichtung anzuzeigen ist, dadurch gekennzeichnet, daß jeder (Doppel-)Meßstelle (11; 12) eine LED-Lichtleiste (19) od. dgl. als Anzeigeeinrichtung zugeordnet ist.

19. Einrichtung nach Anspruch 18, dadurch gekennzeichnet, daß die einzelnen LED-Elemente (19) der Lichtleiste unterschiedlichen Abständen bzw. Abstandsbereichen zwischen dem jeweiligen Initiator (S) und dem Zugmittel (2) zugeordnet sind.

20. Einrichtung nach Anspruch 19, dadurch gekennzeichnet, daß ein inneres bzw. mittleres Element (19a) einer Lichtleiste bei seiner Aktivierung einen ordnungsgemäßen mittigen Lauf des Zugmittels (2) anzeigt; daß das (die) benachbarte(n) LED-Element(e) (19b, 19c. ...) einem seitlichen vorgegebenen Auswanderungszustand zugeordnet ist (sind) und zur optischen Abgabe eines Vorwarnsignals gegenüber den innersten Elementen (19a) vorzugsweise mit einer anderen, ggf. von innen nach außen an Farb- und/oder Leuchtintensität zunehmenden Farbgebung versehen ist (sind); daß dem (letzten) Vorwarn-Element wenigstens ein Element (19) zur optischen Abgabe eines Alarmsignals nachgeordnet ist, dessen Farbgebung und/oder Farbintensität und/oder Leuchtstärke bevorzugt unterschiedlich zu den vorhergehenden Elementen (19) ist; und daß dem (den) alarmgebenden Element(en) ein Element zur optischen Abgabe eines die Abschaltung der Anlage anzeigenden Signals nachgeordnet ist, dessen Farbgebung bzw. -intensität besonders auffallend ist.

$X_{S1}$

$X_{S2}$

$\Delta X_{s12} = X_{S1} - X_{S2}$

S1

S2

S3

S4

$X_{S3}$

$X_{S4}$

$\Delta X_{s34} = X_{S3} - X_{S4}$

$\text{II} b$

$\text{II} b$

a)

b)

c)

$\Delta X_{s12}$

$17_2$

$\Delta X_{s34}$

$17_2'$

$-a$ $+b$ $+d$ $+i$

$-e$ $-c$ $+g$ $+h$

$19$

$-\Delta X_{s12}$ $0$ $+\Delta X_{s12}$

$19$

$-\Delta X_{s12}$ $0$ $+\Delta X_{s12}$

FIG. 2

FIG. 3

FIG. 4

FIG. 5

FIG. 6

Europäisches
Patentamt

**EUROPÄISCHER RECHERCHENBERICHT**

Nummer der Anmeldung

EP 98 11 7126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | SOVIET PATENTS ABSTRACTS Section PQ, Week 932328. Juli 1993 Derwent Publications Ltd., London, GB; Class Q35, AN 93-187312 XP002096201 & SU 1 740 282 A (ODESS FOOD IND TECH) , 15. Juni 1992 | 1-7,9 | B65G43/00 B65G39/16 |
| A | * Zusammenfassung * | 15-20 | |
| X | US 4 959 040 A (FELLINGHAM GEORGE ET AL) 25. September 1990 * Spalte 5, Zeile 15 - Spalte 10, Zeile 2; Abbildungen * | 1,2,9, 10,12,15 | |
| X | EP 0 387 242 A (IFE GMBH) 12. September 1990 * Spalte 3, Zeile 44 - Spalte 5, Zeile 40; Abbildungen * | 1,2, 10-16 | |
| A | DE 11 65 398 B (ERHARDT & LEIMER O.H.G) | | RECHERCHIERTE SACHGEBIETE (Int.Cl.6) |
| A | DE 23 48 549 A (HARTMANN AG MASCHF) 3. April 1975 | | B65G |
| A | WO 96 26139 A (AUMUND FOERDERERBAU ;PIETERS HANS THEO (DE); AUMUND FRANZ W (DE)) 29. August 1996 | | |

Der vorliegende Recherchenbericht wurde für alle Patentansprüche erstellt

| Recherchenort | Abschlußdatum der Recherche | Prüfer |
|---|---|---|
| BERLIN | 11. März 1999 | von Arx, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
      .........................................................
& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 11 7126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-1999

| Im Recherchenbericht angeführtes Patentdokument | | Datum der Veröffentlichung | Mitglied(er) der Patentfamilie | | Datum der Veröffentlichung |
|---|---|---|---|---|---|
| US 4959040 | A | 25-09-1990 | KEINE | | |
| EP 0387242 | A | 12-09-1990 | CS<br>PT | 9001140 A<br>93356 A | 13-08-1991<br>31-03-1992 |
| DE 1165398 | B | | KEINE | | |
| DE 2348549 | A | 03-04-1975 | KEINE | | |
| WO 9626139 | A | 29-08-1996 | KEINE | | |

Für nähere Einzelheiten zu diesem Anhang : siehe Amtsblatt des Europäischen Patentamts, Nr. 12/82

EPO FORM P0461